# EUROPEAN PATENT SPECIFICATION

(11) **EP 3 701 159 B1**
(45) Date of publication and mention of the grant of the patent: **29.11.2023**
(21) Application number: 17847726.1
(22) Date of filing: 27.12.2017
(51) Int. Cl.: F16C 17/03, F16C 17/06, F16C 32/06

(54) **BEARING PAD FOR A HYDRO-GENERATING UNIT AND HYDRO-GENERATING UNIT WITH SUCH A BEARING PAD**
LAGERSEGMENT FÜR EINE WASSERKRAFTGENERATOREINHEIT UND WASSERKRAFTGENERATOREINHEIT MIT EINEM SOLCHEN LAGERSEGMENT
PATIN DE PALIER POUR UNITÉ DE PRODUCTION D'ÉNERGIE HYDRAULIQUE ET UNITÉ DE PRODUCTION D'ÉNERGIE HYDRAULIQUE ÉQUIPÉE D'UN TEL PATIN DE PALIER

(30) Priority: 01.12.2017 WO PCT/IB2017/001610
(43) Date of publication of application: 02.09.2020
(73) Proprietor: GE Renewable Technologies, 38100 Grenoble (FR)
(72) Inventor: PAJACZKOWSKI, Piotr Antony, 5400 Baden (CH); BERCHTOLD, Olivier, 5400 Baden (CH)
(74) Representative: Brevalex
(86) International application number: PCT/IB2017/001753
(87) International publication number: WO 2019/106404

(56) References cited:
- JP-A- H09 303 382
- JP-A- S59 147 114
- US-A- 5 393 145

## Description

### BACKGROUND OF THE INVENTION

The present invention relates to hydro-generating units, such as hydro-generators. It refers to a bearing pad for a hydro-generating unit according to the preamble of claim 1.

It further refers to a hydro-generating unit with such a bearing pad. A hydro-generating unit may also be referred to in the art as a hydro-generator.

### PRIOR ART

The present invention relates to bearings of hydro-generator units. For example, document WO 2004/001241 A1 discloses a bearing for a rotor of a rotating machine, especially a hydro-generator, which rotates around a vertically rotating axis. Said bearing is embodied as a sliding bearing and comprises first means for axial bearing and second means for radial bearing. Due to said bearing, simplified and improved bearing properties are achieved such that the first and second means are united to form a combined radial and axial bearing which simultaneously comprises axially sliding surfaces and radially sliding surfaces.

A plate suitable for engagement with a backing plate of a bearing pad is also shown in document US5393145A, where the plate comprises: a base plate and an offset protruding from the base plate, wherein the offset is arranged to fit into a complementary recess in the backing plate.

Often, polymer-coated bearings are used for this purpose. For example, document WO 2013/178266 A1 discloses a slide bearing, which has a layered structure which is substantially uniform over the circumference thereof and comprises a base, a lead-free slide layer having a thickness which is reduced in edge zones as compared to a central zone between the edge zones, and a polymer coating which is thicker in the edge zones as compared to the central zone, so that the surface level of the coating is substantially flat as seen in axial cross-section. This creates a kind of reservoir of coating material in the edge zones, which is particularly useful for initial wear during a phase, in which the bearing and the shaft get "adjusted to each other". This advantageously increases the resistance to edge seizure and leads to an improved alignment of the shaft, such as a crankshaft, relative to the bearing.

The state of the art designs for polymer-coated bearings are based on a mechanical anchoring between the metallic backing and the polymer itself. These designs use either a sintered bronze, a soldered wire mesh or an array of tiny grooves machined in the backing part of the bearing. The common feature of all these solutions is that once such an intermediate layer is created the polymer is pressed into it under high temperature and pressure. This process creates mechanical connection between the metallic and polymer materials. The main drawback of such technology is its high degree of its complexity and consequently cost of the final product. It requires several steps and specialized equipment in order to create the final product. This increases the cost and limits the number of potential suppliers. Such specialized equipment limits the maximum sizes that can be achieved using a given technology. Once both components are bonded, there is no way to disconnect them without destroying the connection so that the polymer layer cannot be replaced in case of sliding surface damage due to wear or bearing seizure.

Typical prior art bonding interfaces that can be found in the industry are shown in Fig. 1 to Fig. 3:
Fig. 1 shows a sectional view of a prior art bearing of the sintered bronze type. A bonding between a metal base 30a and a polymer layer 32a is effected by bonding means 31a in form of a sinter layer.
Fig. 2 shows a sectional view of a prior art bearing of the soldered wire mesh type. Here a bonding between metal base 30b and polymer layer 32b is effected by a bonding means 31b in form of a wire mesh, which is soldered to metal base 30b at one side and embedded in the polymer layer on the other side.
Fig. 3 shows a sectional view of a prior art bearing of the grooves matrix type. Metal base 30c comprises as a bonding means 31c a matrix of grooves, into which the polymer layer 32c engages.

For example, US 6,332,716 B1 discloses a composite bearing in which to a backing metal is bonded to a resin layer in which polytetrafluoroethylene (PTFE) is added to a base resin consisting essentially of polyether ether ketone so that the proportion of polytetrafluoroethylene becomes 0.1 to 50% by weight based on the resin layer and the polytetrafluoroethylene is dispersed in the form of particles in the base resin.

Document US 5,229,198 discloses a low-friction bearing material including a matrix formed by a wire mesh screen which is fused to a metal backing sheet. Polytetrafluoroethylene or other polymeric resin fills the interstices within the screen and between the screen and the backing sheet and locks itself rigidly to the screen and the backing sheet in order to impart high strength to the bearing material.

Document US 2005/0260431 A1 describes a composite material which is to be used in sliding bearings and comprises a metallic support and at least one reinforcement material having an open structure. Said support and reinforcement material are connected to each other by means of a metallic connection. An overlay which is a polyethylene (PE)-based layer is provided on the reinforcement material as an additional layer.

### SUMMARY OF THE INVENTION

It is an object of the present invention to provide a plate according to claim 1.

The plate according to the invention is formed in such way that it is thinner around its edge than compared to the area defined by the offset. Due to this arrangement the plate has higher stiffness around its edge. The plate is more elastic within its inner area, so that it is more deformable than the edge of the plate.

The difference in deformability allows the creation of a concave recess or pocket in the surface of the plate into which lubricating oil may flow when the bearing is under a bearing load when the plate is engaged with the backing plate. The pocket increases the ability to maintain the hydrodynamic oil film pressure and increases the load capacity of the bearing. In particular, the pocket reduces loss of oil along the side edges of the bearing pad, and a better seal along the side edges of the bearing pad.

Therefore, the invention advantageously enables the creation of a sealing stripe around the bearing, allowing a higher load capacity and/or a larger operational safety margin.

It is another object of the present invention to provide a bearing pad for a bearing of a hydro-generator unit, according to claim 2, which is a simplified approach of a polymer plate pad design, which allows to reduce manufacturing costs of the polymer coated pads while enhancing their main advantages, such as high thermomechanical strength and low wear under mixed lubrication regime.

According to an embodiment of the invention the plate may be removably attached with a first side to a second side of the backing plate. The recess may be provided in the second side of the backing plate. The offset of the base plate of the plate protrudes from the base plate on the first side. The offset fits into the pocket in the second side of the backing plate. The offset may allow for a complementary fit with the pocket or recess.

The plate and the backing plate may have the same edge contour.

The edge of the plate may be offset to the center with respect to the edge of the backing plate.

According to another embodiment of the invention at least one bolt is provided to fix the plate in its position on the backing plate.

Especially, a plurality of bolts may be provided in a distributed arrangement.

Furthermore, a locking means may be provided at the rim of the plate, which may interact with the sidewall of the pocket of the backing plate.

Especially, the locking means may comprise a key and slot joint extending along the rim of said plate. Preferably, at one side of the bearing pad a removable fixing plate may be provided, which may allow the plate to be inserted from the one side by being slid in, when said fixing plate is removed, and which may close the pocket and may fixe the plate in the pocket in its slid-in position, when the fixing plate is fastened to the backing plate.

The fixing plate may be fastened to the backing plate, preferably by means of fixing screws.

According to a further aspect of the invention there is provided a hydro-generator unit which may be equipped with a segmented bearing, which may comprise a plurality of bearing pads, whereby the bearing pads are configured in accordance with the invention.

In one example of the invention the polymer part may be made at least partly of polyetheretherketone (PEEK). PEEK is a preferred material with advantageous properties in terms of material strength making PEEK superior against other polymers. In another example the polymer part may be made at least partly of polytetrafluroethylene (PTFE). The polymer may have at least one filler. The polymer part may be made from a composition of different polymers and different grades of polymers. In a further example of the invention, the at least one filler may be carbon fibers and/or graphite.

It is another object of the present invention to provide a hydro-generator unit with a bearing pad according to the invention.

It is to be appreciated that one or more of the aspects, embodiments and features of any of the above aspects or embodiments of the invention may be readily combined, as will be readily apparent to the skilled person.

### BRIEF DESCRIPTION OF THE DRAWINGS

The present invention is now to be explained more closely by means of different embodiments and with reference to the attached drawings.

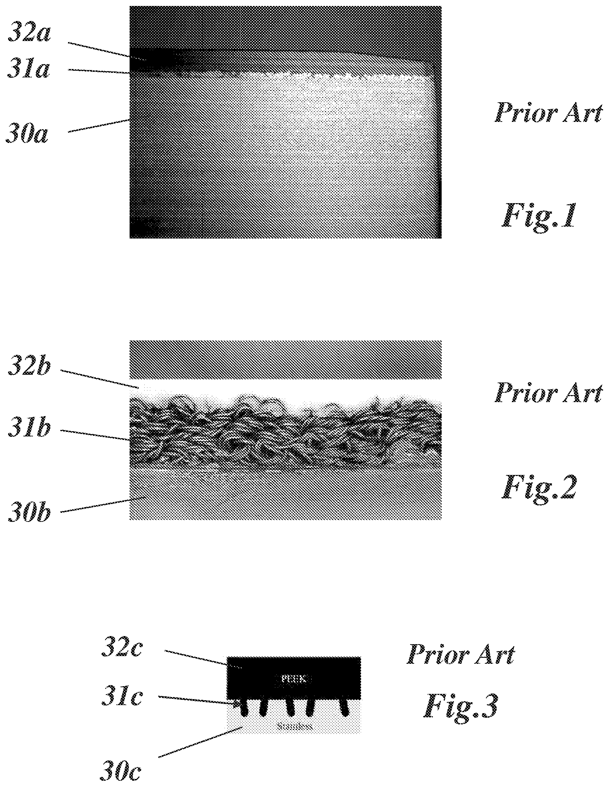

- Fig. 1: shows a sectional view of a prior art bearing of the sintered bronze type;
- Fig. 2: shows a sectional view of a prior art bearing of the soldered wire mesh type;
- Fig. 3: shows a sectional view of a prior art bearing of the grooves matrix type;

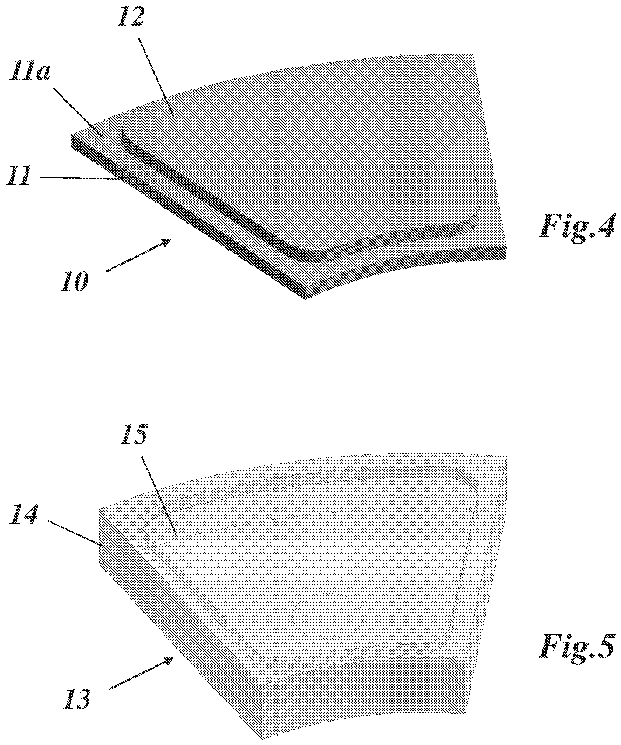

- Fig. 4: shows a perspective side view of a polymer plate according to an embodiment of the invention;
- Fig. 5: shows a perspective side view of a respective backing pad to be removable combined with the polymer plate of Fig. 4;

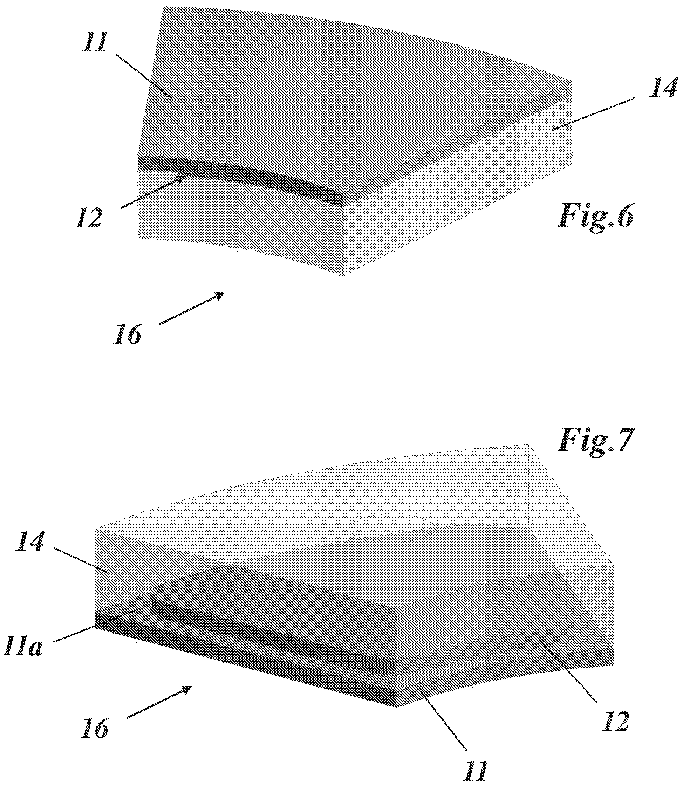

- Fig. 6: shows a perspective side view on the upper side of the bearing pad combining polymer plate of Fig. 4 and backing pad of Fig. 5;
- Fig. 7: shows a perspective side view on the lower side of the bearing pad combining polymer plate of Fig. 4 and backing pad of Fig. 5;

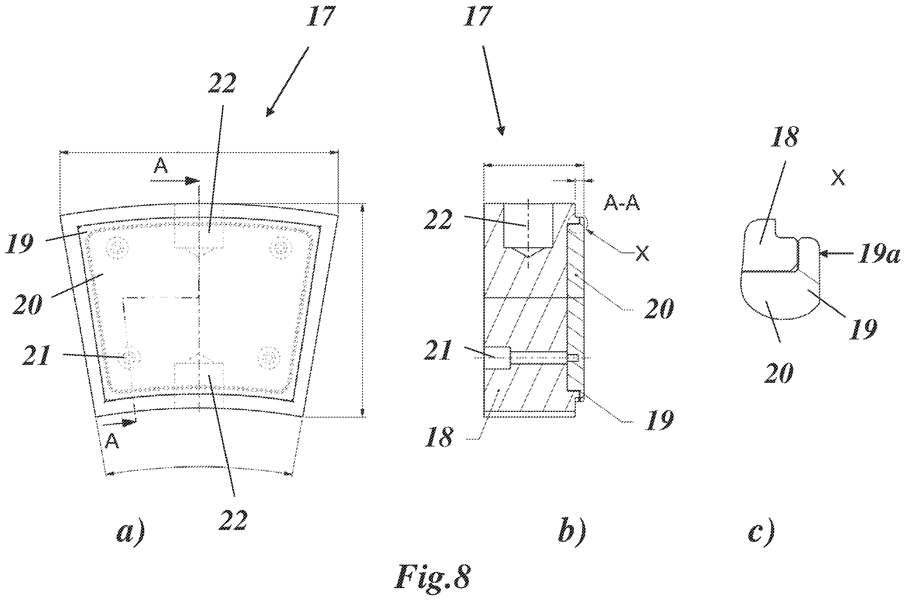

- Fig. 8: shows a bearing pad according to another embodiment of the invention, with Fig. 8(a) being a top view, Fig. 8(b) being a sectional view, and Fig. 8(c) showing a detail of the edge region of the pad;

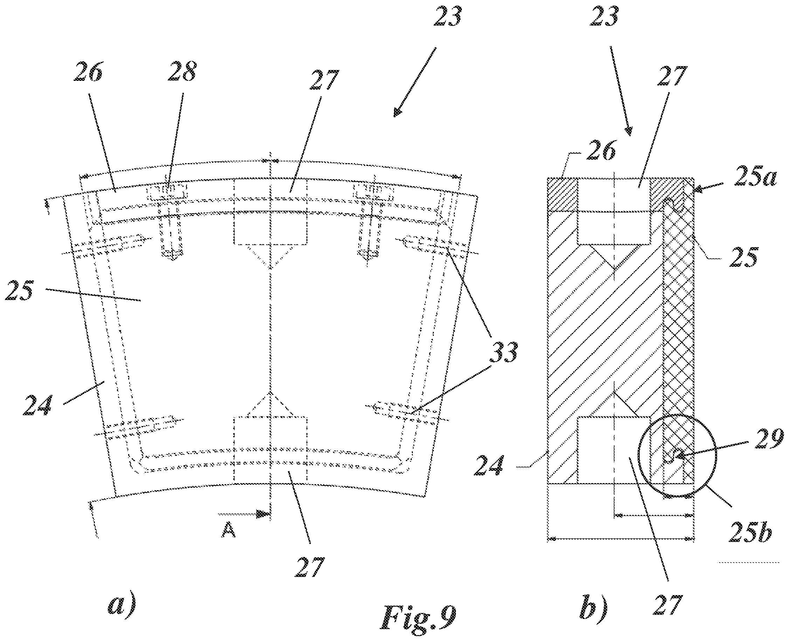

- Fig. 9: shows a bearing pad according to a further embodiment of the invention, with Fig. 9(a) being a bottom view and Fig. 9(b) being a sectional view; and

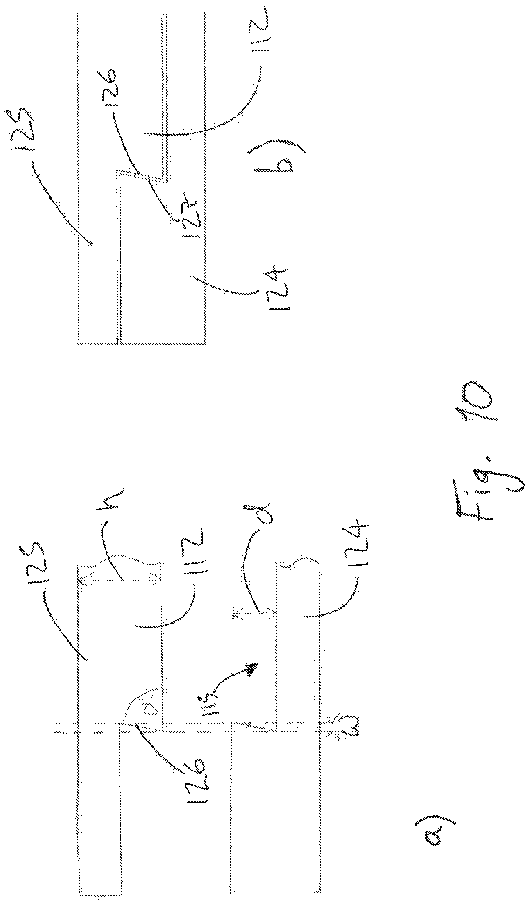

- Fig. 10: shows a bearing pad locking means according to a further embodiment of the invention, with Fig. 10(a) showing the locking means in a disengaged configuration and Figure 10(b) showing the locking means in an engaged configuration.

### DETAILED DESCRIPTION OF DIFFERENT EMBODIMENTS OF THE INVENTION

The polymer plate pad design of the present invention is a simplified approach, which allows to reduce manufacturing costs with respect to the polymer coated pads while enhancing their main advantages, such as high thermomechanical strength and low wear under a mixed lubrication regime.

According to the invention the polymer plate is placed in a pocket machined within a steel backing pad. The polymer plate features an offset that fits exactly with the pocket, which results in a firm interlocking connection of both parts. In operation the friction and contact forces around the plate are sufficient to hold the plate in place even under extreme conditions (e.g. bearing seizure).

A second important feature of the polymer plate design according to the invention can be a sealing stripe around the pad border. Due to its lower thickness (higher stiffness) it deforms less (than the thicker plate inside the border) under the lubricating film pressure. This effect allows creating a concave pocket shape of the lubricating film, which maintains the pressure and increases the load carrying capacity of the bearing.

Figs. 4 to 7 show a first embodiment of the bearing pad according to the invention. As the bearing pad 16 of Fig. 6 and 7 is a segment of an annular ring-like bearing the outer contour of the bearing pad 16 is nearly trapezoidal. The main parts of bearing are a polymer plate 10 (Fig. 4) and a metal backing pad 13 (Fig. 5).

Backing pad 13 comprises a backing plate 14 with a recess or pocket 15 being provided on its upper side. Pocket 15, which may be machined away, has in this example a constant depth and extends over most of the area of the upper side of backing plate 14 but is still surrounded by a small rim, where the material of the backing plate 14 has not been removed. However, other configurations of the pocket, especially with a varying depth, are possible within the scope of the present invention.

Polymer plate 10 comprises a base plate 11 of a first thickness with an offset 12 of a second thickness which adds to said first thickness. The edge contour of said offset 12 and the second thickness are such that the offset 12 fits exactly into pocket 15 of backing plate 14, when polymer plate 10 is combined upside down with said backing plate 14 (Fig. 6 and 7). Base plate 11 has the same form and extension as backing plate 14 such that a perfect fit is achieved. The edge contour of offset 12 and pocket 15 has rounded edges to avoid any notch effects.

Offset 12 of polymer plate 10 is surrounded by a small rim of first thickness, which acts as a sealing stripe 11a, when polymer plate 10 and backing plate 14 are combined as shown in Fig. 6. As has been explained before, due to its lower thickness (higher stiffness) it deforms less than the thicker offset part under the lubricating film pressure. This effect allows creating a concave pocket shape of the lubricating film, which maintains the pressure and increases the load carrying capacity of the bearing.

The simple offset polymer plate 10 of Fig. 4 may be fixed on backing plate 14 with glue (not shown) as a backup solution preventing separation in upwards direction.

In addition or as an alternative, in a bearing pad 17 (Fig. 8) the polymer plate 19, 20 with base plate 19, offset 20 and sealing rim 19a may be fixed to backing plate 18 with (four) bolts 21 (at the edges) as a backup solution preventing separation in upwards direction. Stud holes 22 shown in Fig. 8 are used for mounting the bearing pad 17.

Furthermore, as shown in Fig. 9, the polymer plate 25 is engaged with the bearing pad 23 and removably secured by a locking means 25b. The sidewalls of the offset of the polymer plate and the sealing stripe 25a interact with the sidewall of said pocket of backing plate 24. Locking means preferably comprises a key and slot joint 29 extending along the rim of polymer plate 25. At one side of bearing pad 23 a removable fixing plate 26 is provided, which allows said polymer plate 25 to be inserted from said one side by being slid in, when fixing plate 26 is removed. Fixing plate 26 then closes said pocket and fixes polymer plate 25 in said pocket in its slid-in position, when fixing plate 26 is fastened to backing plate 24 by means of (two) fixing screws 28. Again, stud holes 27 are provided in backing plate 24 for mounting bearing pad 23. In addition, threaded holes 33 may be provided for an additional fixture of the configuration.

An alternative locking means 125b is shown in Fig. 10(a) in a disengaged state and in Fig. 10(b) in an engaged state. A polymer plate 125 is engaged with a backing plate pad 124 and removably secured by the alternative locking means 125b. The faces of the sidewalls 126 of the offset 112 of the polymer plate 125 are not perpendicular to the plane of the polymer plate 125, but are inclined at an angle α. Preferably the angle is 1.4°.

The sidewalls 127 of the recess 115 are also inclined to match the sidewalls 126 of the polymer plate 125, such that the polymer plate 125 can be secured to the backing pad 124 by a push-fit.

The height h of the polymer plate 125 is preferably 8mm and the depth d of the recess 115 is preferably 4mm. The width of the inclined portions is preferably 0.1 mm.

In general, pins, ribs, rivets and other similar joints, either machined or fixed on the base plate, which can prevent the polymer plate to move laterally and to detach from base plate, may be provided within the present invention before introduction of polymer plate, which has to fit to such base plate surface.

Any combination of the variants listed above can be used within the invention as defined in the appended claims. The disclosed bearing pads are applicable for thrust and guide bearings.

In summary, the new solution features separate backing plate and sliding surface components that can be easily separated e.g. during maintenance. The state of the art designs for polymer-coated bearings are based on a mechanical anchoring between the metallic backing and the polymer itself. These designs use either a sintered bronze, a soldered wire mesh or an array of tiny grooves machined in the backing part of the bearing. The common feature of all these solutions is that once such an intermediate layer is created the polymer is pressed into it under high temperature and pressure. Once both components are bonded, there is no way to disconnect them without destroying the connection of the polymer layer cannot be replaced in case of sliding surface damage due to wear or bearing seizure.

Thus, the main advantages of the proposed solution are:
- A simplified design, which leads to lower manufacturing costs, while retaining equal physical properties of the product. The estimated cost reduction equals 50%, based on the prototype costs, compared to the current product.
- Maintenance in case of bearing failure is simplified and accelerated - in case of damage it is only necessary to replace the polymer plate.
- The proposed polymer plate design is easily scalable. The dimensions of the final product are limited only through the maximum dimensions of the raw materials available in the market.
- An important advantage of the proposed polymer plate design is the sealing stripe around the pad border. Due to its lower thickness (higher stiffness) it deforms less (than the thicker plate inside the border) under the lubricating film pressure. This effect allows to create a central concave pocket shape of the lubricating film which maintains the pressure and increases the load carrying capacity of the bearing.
- The manufacturing process is simplified.
- The solution allows easy replacement of the polymer layer in case of bearing failure.

### LIST OF REFERENCE NUMERALS

- 10,19,25: polymer plate
- 11,19: base plate
- 11a: sealing stripe
- 12,20: offset
- 13: backing pad
- 14,18,24: backing plate
- 15: pocket
- 16,17,23: bearing pad
- 19a: sealing stripe
- 21: bolt
- 22,27: stud hole
- 25a: sealing stripe
- 25b: locking means
- 26: fixing plate
- 28: fixing screw
- 29: key and slot joint
- 30a,b,c: metal base
- 31a,b,c: bonding means
- 32a,b,c: polymer layer
- 33: threaded hole

## Claims

1. A plate suitable for engagement with a backing plate of a bearing pad (16, 17, 23), wherein the plate comprises:
a base plate (11, 19); and
an offset (12, 20) protruding from the base plate, wherein the offset is arranged to fit into a complementary recess (15) in the backing plate, **characterized in that** the plate is a polymer plate and the base plate of the polymer plate projects from the offset such that the offset of the polymer plate is surrounded by a sealing stripe (11a) having a thickness less than that of the offset.

2. Bearing pad (16, 17, 23) for the bearing of a hydro-generator unit, the bearing pad (16, 17, 23) comprising:
a polymer part (10, 19, 25) and a metal base (14, 18, 24), which are combined to form said bearing pad (16, 17, 23), wherein the polymer part is a separate plate (10, 19, 25) according to claim 1
wherein the metal base is a backing plate (14, 18, 24), and that said plate (10, 19, 25) is removably attached to said backing plate (14, 18, 24).

3. Bearing pad as claimed in Claim 2, wherein said plate (10, 19, 25) is removably attached with a first side to a second side of said backing plate (14, 18, 24), said recess (15) being provided in said second side of said backing plate (14, 18, 24), and wherein said offset (12, 20) protrudes from said base plate (11, 19) on said first side, which offset (12, 20) fits into said recess (15) in said second side of said backing plate (14, 18, 24).

4. Bearing pad as claimed in any of claims 2 or 3, wherein that said plate (10, 25) and said backing plate (14, 24) have the same edge contour.

5. Bearing pad as claimed in any of claims 2 to 4, wherein the edge of said plate (19) is offset to the center with respect to the edge of said backing plate (18).

6. Bearing pad as claimed any of claims 2 to 5, wherein at least one bolt (21) is provided to extend through said backing plate (18) into said plate (19) to fix said plate (19) in its position on said backing plate (18).

7. Bearing pad as claimed in Claim 6, wherein a plurality of bolts (21) is provided in a distributed arrangement.

8. Bearing pad as claimed in any of Claims 2 to 7, wherein a locking means (25b) is provided to removably secure the plate (25) to the backing plate (24).

9. Bearing pad as claimed in Claim 8, wherein said locking means (25b) comprises a key and slot joint (29) extending along the rim of said polymer plate (25), and that at one side of said bearing pad (23) a removable fixing plate (26) is provided, which allows said plate (25) to be inserted from said one side by being slid in, when said fixing plate (26) is removed, and which closes said pocket and fixes said plate (25) in said pocket in its slid-in position, when said fixing plate (26) is fastened to said backing plate (24).

10. Bearing pad as claimed in Claim 9, wherein that said fixing plate (26) is fastened to said backing plate (24) by means of fixing screws (28).

11. Bearing pad as claimed in any of claims 2 to 10, wherein the polymer part is made at least partly of polyetheretherketone (PEEK).

12. Bearing pad as claimed in any of claims 2 to 11, wherein the polymer part is made at least partly of polytetrafluoroethylene (PTFE).

13. Bearing pad as claimed in any of claims 2 to 12, wherein the polymer has at least one filler.

14. Bearing pad as claimed in Claim 13, wherein at least one filler is carbon fibers and/or graphite.

15. Hydro-generator unit with a segmented bearing, which comprises a plurality of bearing pads, **characterized in that** said bearing pads are configured in accordance with any of Claims 2 to 14.

## Patentansprüche

1. Platte, die zum Ineinandergreifen mit einer Trägerplatte eines Lagersegments (16, 17, 23) geeignet ist, wobei die Polymerplatte umfasst:
eine Basisplatte (11, 19); und
einen Versatz (12, 20), der von der Basisplatte vorsteht, wobei der Versatz so angeordnet ist, dass er in eine komplementäre Aussparung (15) in der Trägerplatte passt, **dadurch gekennzeichnet, dass** die Platte eine Polymerplatte ist und die Basisplatte der Polymerplatte derart vom Versatz vorspringt, dass der Versatz der Polymerplatte von einem Dichtungsstreifen (11a) umgeben ist, der eine geringere Dicke als die des Versatzes aufweist.

2. Lagersegment (16, 17, 23) für die Lagerung einer Wasserkraftgeneratoreinheit, wobei das Lagersegment (16, 17, 23) umfasst:
ein Polymerteil (10, 19, 25) und eine Metallbasis (14, 18, 24), die kombiniert sind, um das Lagersegment (16, 17, 23) zu bilden, wobei das Polymerteil eine separate Polymerplatte (10, 19, 25) nach Anspruch 1 ist,
wobei die Metallbasis eine Trägerplatte (14, 18, 24) ist und dass die Platte (10, 19, 25) entfernbar an der Trägerplatte (14, 18, 24) angebracht ist.

3. Lagersegment nach Anspruch 2, wobei die Platte (10, 19, 25) mit einer ersten Seite entfernbar an einer zweiten Seite der Trägerplatte (14, 18, 24) angebracht ist, wobei die Aussparung (15) an der zweiten Seite der Trägerplatte (14, 18, 24) vorgesehen ist und wobei der Versatz (12, 20) von der Basisplatte (11, 19) auf der ersten Seite vorsteht, wobei der Versatz (12, 20) in die Aussparung (15) an der zweiten Seite der Trägerplatte (14, 18, 24) passt.

4. Lagersegment nach einem der Ansprüche 2 oder 3, wobei dass die Platte (10, 25) und die Trägerplatte (14, 24) die gleiche Kantenkontur aufweisen.

5. Lagersegment nach einem der Ansprüche 2 bis 4, wobei die Kante der Platte (19) in Bezug auf die Kante der Trägerplatte (18) zur Mitte versetzt ist.

6. Lagersegment nach einem der Ansprüche 2 bis 5, wobei mindestens ein Bolzen (21) so vorgesehen ist, dass er sich durch die Trägerplatte (18) in die Platte (19) erstreckt, um die Platte (19) in ihrer Position an der Trägerplatte (18) zu befestigen.

7. Lagersegment nach Anspruch 6, wobei eine Vielzahl von Bolzen (21) in einer verteilten Anordnung vorgesehen ist.

8. Lagersegment nach einem der Ansprüche 2 bis 7, wobei ein Verriegelungsmittel (25b) vorgesehen ist, um die Platte (25) entfernbar an der Trägerplatte (24) zu sichern.

9. Lagersegment nach Anspruch 8, wobei das Verriegelungsmittel (25b) eine Nut- und Feder-Verbindung (29) umfasst, die sich entlang des Randes der Polymerplatte (25) erstreckt und dass auf einer Seite des Lagersegments (23) eine entfernbare Befestigungsplatte (26) vorgesehen ist, die das Einsetzen der Platte (25) von der einen Seite durch Einschieben ermöglicht, wenn die Befestigungsplatte (26) entfernt ist, und die die Tasche verschließt und die Platte (26) in ihrer eingeschobenen Position in der Tasche befestigt, wenn die Befestigungsplatte (26) an der Trägerplatte (24) festgemacht ist.

10. Lagersegment nach Anspruch 9, wobei die Befestigungsplatte (26) mittels Befestigungsschrauben (28) an der Trägerplatte (24) festgemacht ist.

11. Lagersegment nach einem der Ansprüche 2 bis 10, wobei das Polymerteil mindestens teilweise aus Polyetheretherketon (PEEK) besteht.

12. Lagersegment nach einem der Ansprüche 2 bis 11, wobei das Polymerteil mindestens teilweise aus Polytetrafluorethylen (PTFE) besteht.

13. Lagersegment nach einem der Ansprüche 2 bis 12, wobei das Polymer mindestens einen Füllstoff aufweist.

14. Lagersegment nach Anspruch 13, wobei mindestens ein Füllstoff Kohlefasern und/oder Graphit ist.

15. Wasserkraftgeneratoreinheit mit einem Segmentlager, das eine Vielzahl von Lagersegmenten umfasst, **dadurch gekennzeichnet, dass** die Lagersegmente in Übereinstimmung mit einem der Ansprüche 2 bis 14 ausgebildet sind.

## Revendications

1. Plaque appropriée pour une mise en prise avec une plaque d'appui d'un tampon de palier (16, 17, 23), dans laquelle la plaque comprend :
une plaque de base (11, 19) ; et
un décalage (12, 20) faisant saillie depuis la plaque de base, dans laquelle le décalage est agencé pour s'adapter dans un évidement complémentaire (15) dans la plaque d'appui, **caractérisée en ce que** la plaque est une plaque polymère et la plaque de base de la plaque polymère se projette à partir du décalage de sorte que le décalage de la plaque polymère est entouré d'une bande d'étanchéité (11a) présentant une épaisseur inférieure à celle du décalage.

2. Tampon de palier (16, 17, 23) pour le palier d'une unité hydro-générateur, le tampon de palier (16, 17, 23) comprenant :
une partie polymère (10, 19, 25) et une base métallique (14, 18, 24), qui sont combinées pour former ledit tampon de palier (16, 17, 23), dans lequel la partie polymère est une plaque séparée (10, 19, 25) selon la revendication 1
dans lequel la base métallique est une plaque d'appui (14, 18, 24), et ladite plaque (10, 19, 25) est fixée de manière amovible à ladite plaque d'appui (14, 18, 24).

3. Tampon de palier selon la revendication 2, dans lequel ladite plaque (10, 19, 25) est fixée de manière amovible par un premier côté à un second côté de ladite plaque d'appui (14, 18, 24), ledit évidement (15) étant prévu dans ledit second côté de ladite plaque d'appui (14, 18, 24), et dans lequel ledit décalage (12, 20) fait saillie à partir de ladite plaque de base (11, 19) sur ledit premier côté, lequel décalage (12, 20) s'adapte dans ledit évidement (15) dans ledit second côté de ladite plaque d'appui (14, 18, 24).

4. Tampon de palier selon l'une quelconque des revendications 2 ou 3, dans lequel ladite plaque (10, 25) et ladite plaque d'appui (14, 24) présentent le même contour de bord.

5. Tampon de palier selon l'une quelconque des revendications 2 à 4, dans lequel le bord de ladite plaque (19) est décalé vers le centre par rapport au bord de ladite plaque d'appui (18).

6. Tampon de palier selon l'une quelconque des revendications 2 à 5, dans lequel au moins un boulon (21) est prévu pour s'étendre à travers ladite plaque d'appui (18) jusque dans ladite plaque (19) afin de fixer ladite plaque (19) dans sa position sur ladite plaque d'appui (18).

7. Tampon de palier selon la revendication 6, dans lequel une pluralité de boulons (21) est prévue dans un agencement distribué.

8. Tampon de palier selon l'une quelconque des revendications 2 à 7, dans lequel un moyen de verrouillage (25b) est prévu pour fixer de manière amovible la plaque (25) à la plaque d'appui (24).

9. Tampon de palier selon la revendication 8, dans lequel ledit moyen de verrouillage (25b) comprend un joint à clavette et à fente (29) s'étendant le long du rebord de ladite plaque polymère (25), et au niveau d'un côté dudit tampon de palier (23), une plaque de fixation amovible (26) est prévue, qui permet à ladite plaque (25) d'être insérée dudit un côté en étant glissée vers l'intérieur, lorsque ladite plaque de fixation (26) est retirée, et qui ferme ladite poche et immobilise ladite plaque (25) dans ladite poche dans sa position glissée vers l'intérieur, lorsque ladite plaque de fixation (26) est fixée à ladite plaque d'appui (24).

10. Tampon de palier selon la revendication 9, dans lequel ladite plaque de fixation (26) est fixée à ladite plaque d'appui (24) au moyen de vis de fixation (28).

11. Tampon de palier selon l'une quelconque des revendications 2 à 10, dans lequel la partie polymère est constituée au moins partiellement de polyétheréthercétone (PEEK).

12. Tampon de palier selon l'une quelconque des revendications 2 à 11, dans lequel la partie polymère est constituée au moins en partie de polytétrafluoroéthylène (PTFE).

13. Tampon de palier selon l'une quelconque des revendications 2 à 12, dans lequel le polymère présente au moins une charge.

14. Tampon de palier selon la revendication 13, dans lequel au moins une charge est constituée de fibres de carbone et/ou de graphite.

15. Unité hydro-générateur à palier segmenté, qui comprend une pluralité de tampons de palier, **caractérisée en ce que** lesdits tampon de palier sont configurés selon l'une quelconque des revendications 2 à 14.
